# EUROPÄISCHE PATENTSCHRIFT

(11) **EP 2 526 386 B1**
(45) Veröffentlichungstag und Bekanntmachung des Hinweises auf die Patenterteilung: **06.11.2013**
(21) Anmeldenummer: 10793154.5
(22) Anmeldetag: 03.12.2010
(51) Int. Cl.: G01F 23/28, G01F 23/284, B65D 88/16, B65D 90/48

(54) **VORRICHTUNG UND VERFAHREN ZUR FÜLLSTANDSMESSUNG DER OBERFLÄCHE EINER FLÜSSIGKEIT IN EINEM TANK MIT FLEXIBLEN WÄNDEN MITTELS EINES RADARSENSORS**
APPARATUS AND METHOD FOR LEVEL MEASUREMENTS OF THE SURFACE OF A LIQUID IN A TANK WITH FLEXIBLE WALLS USING A RADAR SENSOR
APPAREIL ET PROCEDE DE MESURE DE NIVEAU DE LA SURFACE D'UN LIQUIDE DANS UN RESERVOIR À PAROIS SOUPLES UTILISANT UN CAPTEUR RADAR

(30) Priorität: 23.01.2010 DE 102010005540
(43) Veröffentlichungstag der Anmeldung: 28.11.2012
(73) Patentinhaber: Hansaconsult Ingenieurgesellschaft MbH, 21465 Reinbek (DE)
(72) Erfinder: JUCHNIEWICZ, Leszek, 21521 Wohltorf (DE); WILSHUSEN, Dirk, 22111 Hamburg (DE); WINKLER, Nils, 20253 Hamburg (DE)
(74) Vertreter: Hauck Patent- und Rechtsanwälte
(86) Internationale Anmeldenummer: PCT/EP2010/007351
(87) Internationale Veröffentlichungsnummer: WO 2011/088864

(56) Entgegenhaltungen:
- EP-A2- 2 078 937
- WO-A1-2008/106193
- WO-A1-2009/047310
- WO-A1-2009/059343
- DE-A1-102008 031 882

## Beschreibung

Die Erfindung bezieht sich auf eine Vorrichtung und auf ein Verfahren zur Füllstandsmessung in einem flexiblen Tank.

Derartig flexible Tanks werden auch als Falttanks (engl. "bladder tanks") bezeichnet.. Die Tankhüllen bestehen aus einem Gummigewebe oder aus einem Kunststoffgewebe. Flexible Tanks können leicht verlegt, abgebaut und zu einem anderen Einsatzort verbracht werden. Deshalb kommen sie insbesondere dann zum Einsatz, wenn zeitweilig an einem Ort eine Flüssigkeit gelagert werden muss. Zur Lagerung von Brennstoffen (z.B. Diesel, Kerosin oder Benzin), (Trink-)Wasser oder landwirtschaftlichen Produkten (z.B. Pflanzenöl) oder Wirkstoffen (z.B. Pflanzenschutzmittel) werden sie infolgedessen häufig zu militärischen, humanitären oder landwirtschaftlichen Zwecken eingesetzt. Falttanks werden mit verschiedenen Füllvolumina angeboten. Es gibt sie insbesondere mit Füllvolumina im Bereich von 1.000 Litern bis zu 1.000.000 Liter.

Das aktuelle Füllvolumen eines flexiblen Tanks wird bislang mittels Handpeilvorrichtungen ermittelt. Dazu wird die Füllhöhe des Mediums im Tank über einer Bezugsfläche, in der Regel dem Bodenniveau, messtechnisch erfasst und dann anhand von Peiltabellen, die für verschiedene Füllstände das Füllvolumen angeben, umgerechnet. Peiltabellen (auch "Tanktabellen" genannt) werden von Herstellern flexibler Tanks in der Regel unter der Voraussetzung ermittelt, dass die Tanks auf einer ebenen, horizontalen Fläche ruhen. In der Praxis werden flexible Tanks jedoch im Gelände verlegt, das vielfach uneben ist bzw. Gefälle aufweist. Dies beeinträchtigt die Genauigkeit der Ermittlung von Füllvolumina mittels Peiltabellen.

Die Ermittlung der Füllhöhe erfolgt entweder durch Peilung des Flüssigkeitsspiegels mit einem Peilstab oder durch Ausnivellieren der Behälteroberkante des flexiblen Tanks mittels einer Nivellierlatte.

Das Verfahren zur Ermittlung der Füllhöhe mittels eines Peilstabes erfolgt sinngemäß zur Ermittlung des Ölstandes in einem Kraftfahrzeugmotor mittels eines Ölmessstabes. Der Peilstab wird bis zur Bezugsebene in die Flüssigkeit eingetaucht und herausgezogen und dann der Füllstand anhand der mit Medium benetzten Oberfläche des Peilstabes abgelesen. Bei geschlossenen Falttanks ist für dieses Verfahren eine Öffnung in der Hülle des Falttanks erforderlich, die in der Regel nur durch Betreten des Tanks erreicht werden kann.

Bei der Messung der Füllhöhe mittels einer Nivellierlatte wird diese auf dem Bezugsniveau außerhalb des Falttanks aufgestellt und die Füllhöhe an der Nivellierlatte mittels eines auf die Behälteroberkante eingestellten horizontalen Zielstrahls abgelesen.

Beiden Verfahren ist gemeinsam, dass sie sehr stark von der Sorgfältigkeit, mit der die Messungen durchgeführt werden und anderen äußeren Einflüssen abhängen. So kann es beispielsweise durch das erforderliche Betreten der Tankhülle bei der Peilung an einem geschlossenen Falttank zu Wellenbewegungen im Medium kommen, die das Messergebnis negativ beeinflussen. Bei der Ermittlung der Füllhöhe mittels einer Nivellierlatte können durch Luft im Tank Messfehler verursacht werden. Die Reproduzierbarkeit der Messergebnisse ist deshalb nur innerhalb eines relativ großen Toleranzfeldes möglich. Darüber hinaus liefern beide Verfahren nur eine Momentaufnahme zum Zeitpunkt der Messungen. Die Messungen selbst sind zeit- und personalintensiv. Die Messergebnisse müssen manuell erfasst und aufbereitet werden. Auch lassen sich thermische Einflüsse, die sich unmittelbar auf das Volumen des Mediums auswirken, nicht oder nur sehr bedingt erfassen.

Aus DE 10 2008 031 882 A1 ist eine Vorrichtung zum Bestimmen eines Speichervolumens eines Speicherbehälters, insbesondere eines Gasvolumens eines Gasspeichers, mit einer mindestens teilweise flexiblen Begrenzung und einer die flexible Begrenzung abdeckenden Abdeckung bekannt geworden, bei der zum Bestimmen des Speichervolumens des Speicherbehälters und zum Erreichen einer einfachen Montagemöglichkeit zwischen der Oberseite der flexiblen Begrenzung und der Unterseite der Abdeckung eine optische Strahlungsquelle oder ein optischer Strahlungssensor zum mindestens teilweise optischen Vermessung der Kontur der flexiblen Begrenzung angeordnet ist. Mit Hilfe der optischen Strahlungsquelle und eines optischen Strahlungssensors erfolgt mindestens teilweise ein optisches Vermessen der Kontur der flexiblen Begrenzung.

Davon ausgehend liegt der Erfindung die Aufgabe zugrunde, eine Technik zur Füllstandsmessung in flexiblen Tanks zur Verfügung zu stellen, die genauere Messergebnisse liefert, weniger zeit- und personalintensiv ist und eine kontinuierliche Füllstandsmessung ermöglicht.

Die Aufgabe wird durch eine Vorrichtung mit den Merkmalen des Anspruches 1 gelöst.

Die erfindungsgemäße Vorrichtung zur Füllstandsmessung in einem flexiblen Tank hat einen Radarsensor als Füllstandssensor zum berührungslosen Erfassen des Füllstandes der Flüssigkeit im Tank, der durch die flexible Wand des Tanks hindurch unmittelbar die Oberfläche des Mediums erfasst.

Vorteilhafte Ausgestaltungen der Vorrichtung sind in Unteransprüchen angegeben.

Ferner wird die Aufgabe durch ein Verfahren mit den Merkmalen des Anspruches 11 gelöst.

Bei dem erfindungsgemäßen Verfahren zur Füllstandsmessung in einem flexiblen Tank wird von einer bestimmten Position oberhalb des Tanks aus mittels eines Radarsensors als Füllstandssensor zum berührungslosen Erfassen eines Flüssigkeitsspiegels der Füllstand der Flüssigkeit im Tank durch die flexible Wand des Tanks hindurch erfasst.

Vorteilhafte Ausgestaltungen des Verfahrens sind in Unteransprüchen angegeben.

Erfindungsgemäß wird mittels eines Radarsensors als Füllstandssensor berührungslos der Flüssigkeitsspiegel im flexiblen Tank durch die flexible Wand des Tanks hindurch erfasst. Hierfür wird der Füllstandssensor oberhalb des Tankes an einem bestimmten Ort platziert. Der Füllstandssensor kann die Höhe der Flüssigkeitssäule im Tank bzw. des Flüssigkeitsspiegels im Tank über einem Nullniveau messen. Das Nullniveau kann bei entleertem Tank ermittelt werden, indem der Füllstandssensor den Boden erfasst, auf dem der Tank ruht. Der jeweilige Abstand des Füllstandssensors von der Flüssigkeitsoberfläche wird vom Füllstandssensor erfasst. Mit Hilfe des Abstands des Nullniveaus vom Füllstandssensor kann der Füllstand im Tank ermittelt werden. Der ermittelte Füllstand kann dokumentiert oder ausgegeben werden. Ferner kann, wie bei der herkömmlichen manuellen Messung, mit Hilfe einer Tanktabelle aus dem ermittelten Füllstand das zugeordnete Füllvolumen ermittelt und dokumentiert oder ausgegeben werden. Die ermittelten Füllstände und Füllvolumina können zur Steuerung der Abgabe von Flüssigkeit aus Tanks und der Nachbefüllung von Tanks genutzt werden. Die erfindungsgemäße Füllstandsmessung ist ohne Personaleinsatz automatisch ohne besonderen Zeitaufwand durchführbar. Sie kann wiederholt zu verschiedenen Zeitpunkten oder in kurzer Abfolge quasi kontinuierlich oder kontinuierlich erfolgen. Als Sensoren, die berührungslos eine Messung des Füllstandes durch die flexible Wand eines Blasentanks hierdurch ermöglichen, dienen Radarsensoren. Bislang wurden Radarsensoren ausschließlich für Füllstandsmessungen in Stahltanks eingesetzt, wobei sie durch eine Öffnung in den Tank eingeführt wurden. Erstmals erfolgt erfindungsgemäß die Messung des Füllstandes durch die flexible Wand eines Falttanks hindurch.

Gemäß einer Ausgestaltung wird der Füllstandssensor möglichst zentral über eine Traversen- oder Kragarmkonstruktion über der Längsachse des Falttanks platziert.

Gemäß einer weiteren Ausgestaltung wird zur Kompensation von Volumenänderungen aufgrund thermischer Einflüsse zusätzlich zur Füllhöhe auch die Temperatur des Mediums im Tank an einem oder mehreren Messpunkten mittels mindestens eines Temperatursensors erfasst. Hierfür kann eine Temperaturmesskette im Tank installiert werden, die über ein rechnergestütztes Auswerteverfahren mit dem Füllstandssensor verbunden werden kann.

Gemäß einer Ausgestaltung werden sämtliche ermittelten Daten mittels einer elektronischen Datenverarbeitungsanlage erfasst und aufbereitet. Grundsätzlich kann dabei die Ermittlung des Füllvolumens anhand der herstellerseitig bereitgestellten Peiltabellen erfolgen. Für die automatische Ermittlung des Füllvolumens können Peiltabellen im Rechner hinterlegt werden.

Mit der erfindungsgemäßen Füllstandsmessung lassen sich noch höhere Genauigkeiten erzielen, wenn gemäß einer Ausgestaltung eine Einrichtung des Messsystems nach dem Aufbau erfolgt. Hierfür wird bei leerem Tank das Nullniveau mittels des Füllstandssensors ausgemessen und als Bezugsebene festgelegt. Im Anschluss erfolgt ein kontinuierliches Befüllen des Tanks über eine genaue Zählvorrichtung bzw. Durchflussmengenmessvorrichtung. Die Zählvorrichtung kann mit dem Füllstandssensor und der Temperaturmesskette über eine Software verknüpft werden. Während des Befüllens werden kontinuierlich die eingefüllte und temperaturkompensierte Menge der Flüssigkeit und der entsprechende Füllstand zueinander in Beziehung gesetzt und es wird eine Peiltabelle erstellt. Damit lassen sich Lagetoleranzen des Falttanks bzw. Lagefehler ausgleichen. Die Peiltabelle wird im Rechner als Referenztabelle für die Ermittlung von Füllvolumina beim Betrieb des Tanks hinterlegt.

Radarsensoren, die für den Einsatz bei der erfindungsgemäßen Vorrichtung zur Füllstandsmessung geeignet sind, sind beispielsweise der Saab Tank-Radar Rex® und der Saab Tank-Radar Pro®. Zum Saab Tank-Radar Rex® gibt es von der Firma Emerson Process Management die Anzeigeeinheit RDU 40 und zum Saab Tankradar Pro die Anzeigeeinheit 2210 DU. Darüber hinaus bietet die Firma Emerson Process Management einen geeigneten Radarsensor unter der Bezeichnung "Radar-Messumformer für Füllstand Serie 5600" an. Ferner bietet die Firma Emerson Process Management geeignete Temperatursensoren mit der Produktbezeichnung "Multiple spot thermometers - MST" an. Hierbei handelt es sich um Temperaturmessketten, die an einem flexiblen Kabel mehrere Temperatursonden haben. Die Temperaturmessketten können durch eine Öffnung in den Tank eingehängt werden und ermitteln auf verschiedenen Niveaus die Temperatur einer eingefüllten Flüssigkeit. Die verschiedenen Messwerte können zur Bildung eines Mittelwertes herangezogen werden.

Nachfolgend wird die Erfindung anhand der anliegenden Zeichnungen von Ausführungsbeispielen näher erläutert. In den Zeichnungen zeigen:
- Fig. 1: ein Radarsensor zur Ermittlung des Füllstandes an einem teleskopierbaren Auslegerarm oberhalb eines Falttanks in einem Vertikalschnitt;
- Fig. 2: ein Radarsensor zur Ermittlung des Füllstandes an einer teleskopierbaren, fest fundamentierten Traverse oberhalb eines Falttanks in einem Vertikalschnitt;
- Fig. 3: ein Radarsensor zur Ermittlung des Füllstandes an einer teleskopierbaren, mobilen Traverse oberhalb eines Falttanks in einem Vertikalschnitt;
- Fig. 4: ein Radarsensor zur Ermittlung des Füllstandes an einer starren Traverse oberhalb eines Falttanks in einem Vertikalschnitt;
- Fig. 5: Prinzipskizze eine Tanklagers mit Bladder Tanks, Falttank mit Radarsensoren und Temperatursensoren in einem Grobschema.

Bei der nachfolgenden Erläuterung verschiedener Ausführungsbeispiele sind übereinstimmende Merkmale mit denselben Bezugsziffern versehen.

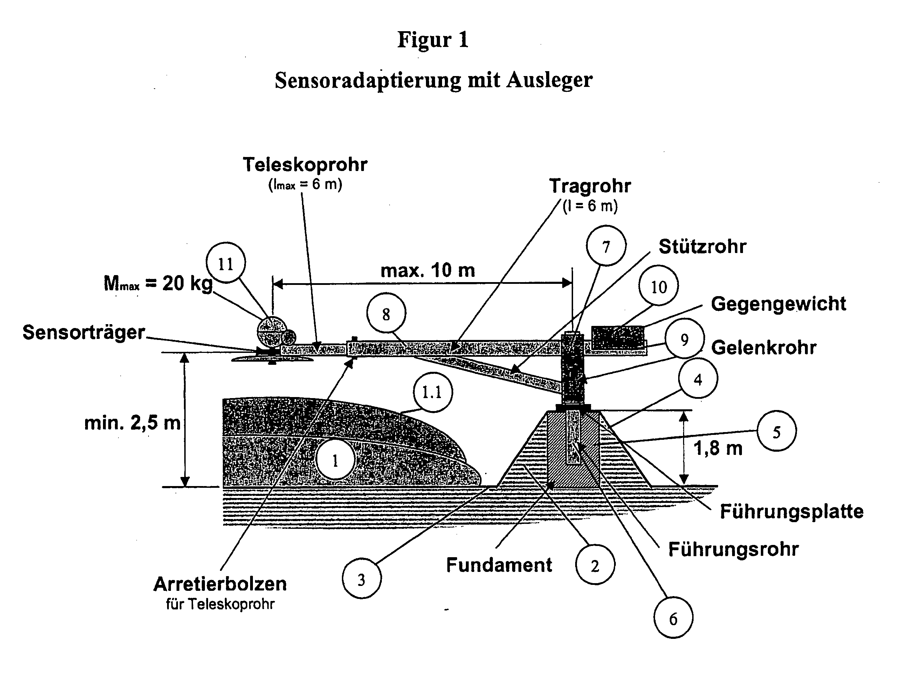

Gemäß **Fig. 1** ist ein Falttank 1 mit einer flexiblen Wand 1.1 in einem Aushub 2 gelagert, der eine flüssigkeitsdichte Auskleidung 3 aufweist. In den Figuren 1 bis 4 ist der Falttank 1 in jeweils dunklerer Tönung in maximal befülltem Zustand und in hellerer Tönung in einem teilweise entleerten Zustand eingetragen.

Auf einem den Aushub 2 seitlich begrenzenden Erdwall 4 ist in einem Fundament 5 in einem Führungsrohr 6 ein vertikaler Tragpfosten 7 schwenkbar gelagert. Der Tragpfosten 7 trägt einen horizontalen, teleskopierbaren Krag- oder Auslegerarm 8. Der teleskopierbare Auslagerarm 8 hat auf der anderen Seite des Tragpfostens 7 eine kurze Verlängerung 9, auf der ein Gegengewicht 10 gelagert ist. Der Auslegerarm 8 trägt an seinem freien Ende einen Radarsensor 11, der vertikal nach unten gerichtet ist. Der Radarsensor 11 ist oberhalb des Falttanks 1 angeordnet. Dabei ist der Auslegerarm 8 so geschwenkt bzw. ausgefahren, dass sich der Radarsensor 11 an einer geeigneten Stelle z.B. oberhalb des Scheitels des Falttankes 1 befindet.

Mittels des Radarsensors 11 kann der Füllstand im Falttank 1 fortlaufend überwacht werden. Diese Anordnung ermöglicht eine genaue Einstellung des Radarsensors 11 auf den Zentralbereich des Falttanks 1. Darüber hinaus kann sie genutzt werden, um den Füllstand in mehreren nebeneinander angeordneten Falttanks 1 zu überwachen. Hierfür kann der Radarsensor 11 durch Schwenken und Teleskopieren des Auslegerarms 8 über den Messbereich eines anderen Falttanks 1 geschwenkt werden.

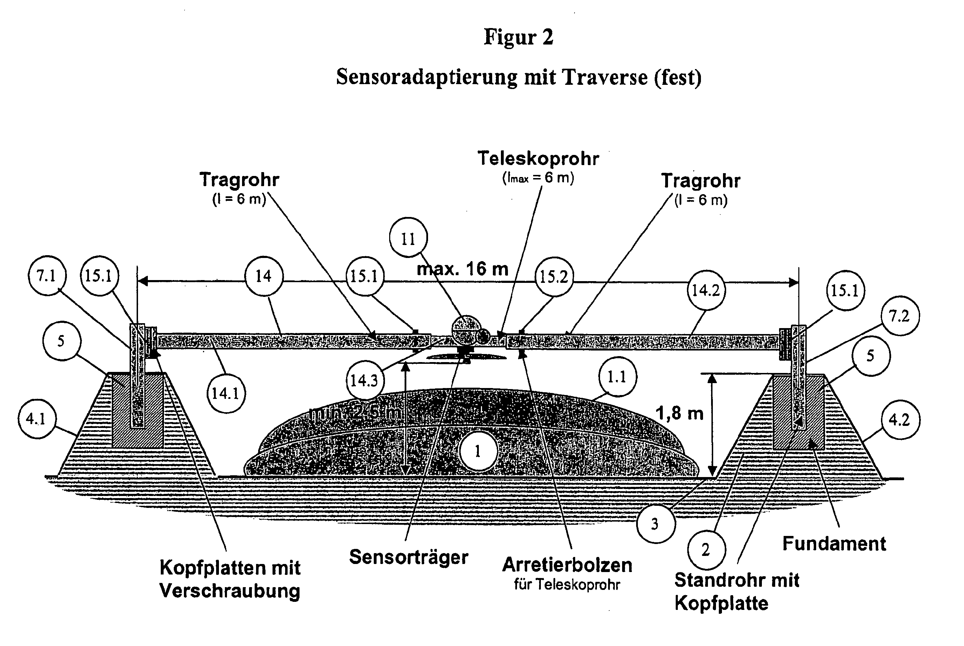

Gemäß **Fig. 2** ist ein Falttank 1 in einem Aushub 2 gelagert, wobei auf zwei einander gegenüberliegenden Erdwällen 4.1, 4.2 jeweils ein Tragpfosten 7.1, 7.2 angebracht ist. Beide Tragpfosten sind fest in ein Fundament 5 einbetoniert.

Zwischen den beiden Tragpfosten 7.1, 7.2 ist eine teleskopierbare Traverse 14 angeordnet. Diese umfasst zwei rohrförmige äußere Traversenteile 14.1, 14.2, die an den äußeren Enden fest mit Kopfplatten 15.1, 15.2 verbunden sind, wobei die Kopfplatten 15.1, 15.2 durch eine Verschraubung mit dem stationären Tragpfosten 7.1 verbunden sind.

In die inneren Enden der rohrförmigen Traversenteile 14.1, 14.2 ist ein mittlerer Traversenteil 14.3 in Form eines Teleskoprohres eingeschoben. der mittlere Traversenteil 14.3 trägt einen Radarsensor 11. Durch Teleskopieren des mittleren Traversenteils 14.3 innerhalb der beiden äußeren Traversenteile 14.1, 14.2 ist der Radarsensor 11 oberhalb des Zentralbereiches des Falttankes 1 einstellbar. In dieser Position kann der mittlere Traversenteil 14.93 über Arretierbolzen 15.1, 15.2 gesichert werden.

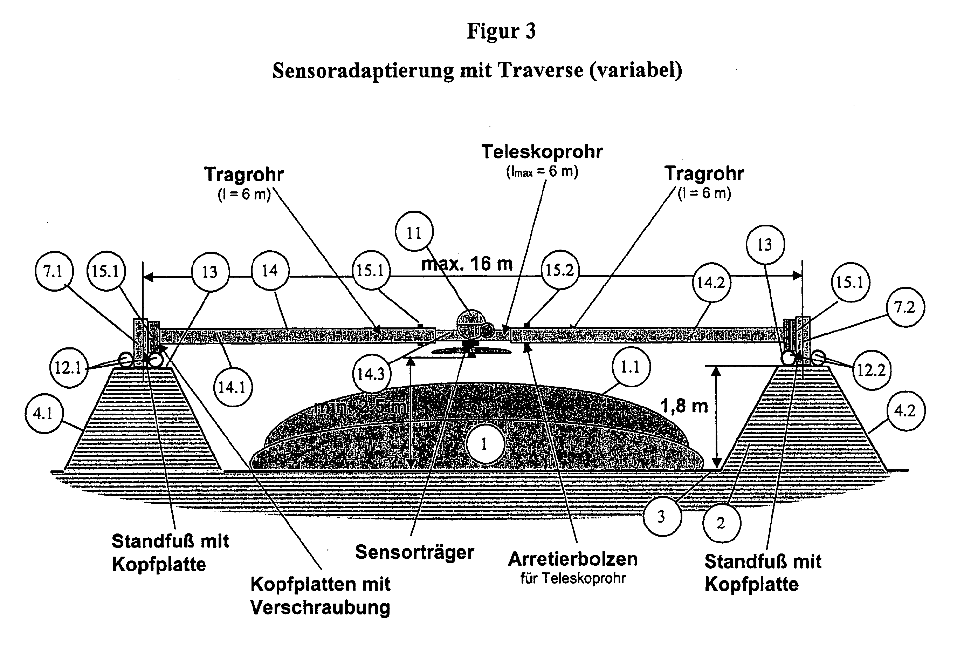

Gemäß **Fig. 3** ist ein Falttank 1 in einem Aushub 2 gelagert, wobei auf zwei einander gegenüberliegenden Erdwällen 4.1, 4.2 jeweils ein Tragpfosten 7.1, 7.2 angebracht ist. Beide Tragpfosten sind beweglich auf den Kronen 13 der Erdwälle 4.1, 4.2 gelagert.

Zwischen den beiden Tragpfosten 7.1, 7.2 ist eine teleskopierbare Traverse 14 angeordnet. Diese umfasst zwei rohrförmige äußere Traversenteile 14.1, 14.2, die an den äußeren Enden fest mit Kopfplatten 15.1, 15.2 verbunden sind, wobei die Kopfplatten 15.1, 15.2 durch eine Verschraubung mit dem stationären Tragpfosten 7.1 verbunden sind.

In die inneren Enden der rohrförmigen Traversenteile 14.1, 14.2 ist ein mittlerer Traversenteil 14.3 in Form eines Teleskoprohres eingeschoben. der mittlere Traversenteil 14.3 trägt einen Radarsensor 11. Durch Teleskopieren des mittleren Traversenteils 14.3 innerhalb der beiden äußeren Traversenteile 14.1, 14.2 ist der Radarsensor 11 oberhalb des Zentralbereiches des Falttankes 1 einstellbar. In dieser Position kann der mittlere Traversenteil 14.93 über Arretierbolzen 15.1, 15.2 gesichert werden.

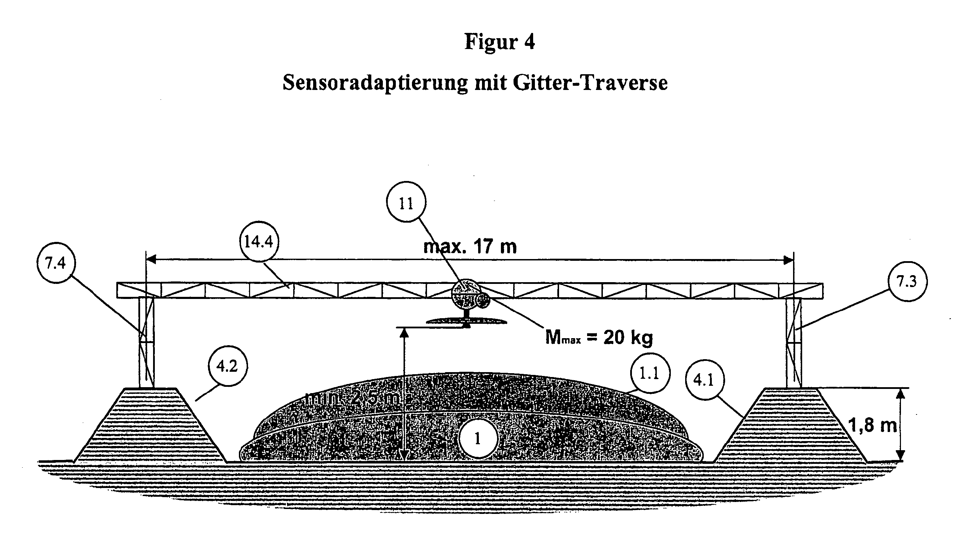

Gemäß **Fig. 4** sind auf den Erdwällen 4.1, 4.2 auf verschiedenen Seiten eines Falttankes 1 stationäre Tragpfosten 7.3, 7.4 fest angeordnet. Darüber ist fest eine Traverse 14.4 angebracht. Die Tragpfosten 7.3, 7.4 und die Traverse 14.4 sind als Gitterkonstruktion ausgebildet. An der Traverse 14.4 ist zentral oberhalb des Falttanks 1 ein Radarsensor 11 befestigt, der vertikal nach unten gerichtet ist.

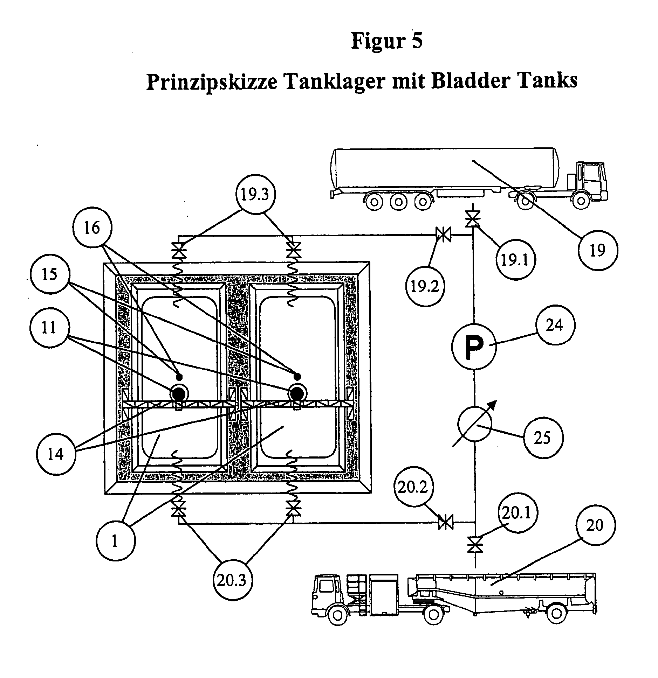

In **Fig. 5** sind Radarsensoren 11 mittels Traverse 14.4 gemäß Fig. 4 oberhalb der Längsachse von Falttanks 1 befestigt. In den Falttank 1 sind durch die Entlüftungsöffnungen 15 Temperatursensoren 16 eingehängt.

Ein anliefernder Straßentankwagen 19 ist über ein Einlagerungsventil 19.1, eine Pumpe 24, eine Zähleinrichtung 25 ein Verteilerventil 20.2 und zwei parallele Tankeingangsventile 20.3 an die Falttanks angeschlossen. Über die Tankauslagerungsventile 19.3, das Verteilerventil 19.2, die Pumpe 24 und die Zähleinrichtung 25 ist wahlweise ein Umpumpen des Mediums über das Verteilerventil 20.2 und die Tankeingangsventile 20.3 oder ein Auslagern über das Auslagerungsventil 20.1 in ein weiteres Tankfahrzeug 20 möglich.

Zum Befüllen eines Falttankes 1 werden die Ventile 19.1 und 20.2 sowie ein Tankeingangsventil 20.3 geöffnet und die Pumpe 24 angestellt. Die Zähleinrichtung 25 misst fortlaufend die Durchflussmenge und der Radarsensor 11 überwacht fortlaufend die Füllhöhe und die Temperatur der eingefüllten Flüssigkeit wird fortlaufend vom Temperatursensor 16 überwacht. Hieraus ermittelt eine an den Radarsensor 11 und den Temperatursensor 16 angeschlossene elektronische Datenverarbeitungsanlage die zu den gemessenen Füllständen gehörenden Füllvolumina. In der Datenverarbeitungsanlage wird hierfür eine Tanktabelle angelegt oder Tankfunktion hinterlegt.

Für die Abgabe von Flüssigkeit aus einem Falttank 1 werden die Ventile 19.1, 20.2 und 20.3 geschlossen und das entsprechende Tankauslagerungsventil 19.3 sowie die Ventile 19.2 und 20.1 geöffnet. Die Pumpe 24 pumpt Flüssigkeit aus dem gewählten Falttank 1 ab. Hierbei wird über den Radarsensor 11 fortlaufend die Füllstandshöhe ermittelt und mittels des Temperatursensors 16 fortlaufend die Temperatur der Flüssigkeit im Falttank 1 ermittelt. Die elektronische Datenverarbeitungsanlage ermittelt mit Hilfe der Tanktabelle oder der Tankfunktion das im Falttank 1 jeweils vorhandene Füllvolumen. Die abgezogene Füllmenge kann durch Vergleich der Füllvolumina vor und nach dem Entnehmen von Flüssigkeit ermittelt werden oder mit Hilfe des vom von der Zähleinrichtung 25 ermittelten Volumen- oder Massestromes berechnet werden.

## Patentansprüche

1. Vorrichtung zur Füllstandsmessung in einem flexiblen Tank (1) mit einem Füllstandssensor (11) zum berührungslosen Erfassen des Füllstandes des Tanks (1) mit einer flexiblen Wand (1.1) und Mitteln zum Halten (16, 17) des Füllstandssensors (11) in einer Position oberhalb der flexiblen Wand (13) des Tanks (1), **dadurch gekennzeichnet, dass** der Tank (1) eine Flüssigkeit umfasst, und dass der Füllstandssensor (11) ein Radarsensor ist, der die Oberfläche der Flüssigkeit im Tank (1) durch die flexible Wand des Tanks (1) hindurch erfasst.

2. Vorrichtung nach Anspruch 1, bei der die Mittel zum Halten eine Traverse (14) oder einen Auslegerarm (8) aufweisen, an der oder an dem der Füllstandssensor (11) befestigt ist.

3. Vorrichtung nach Anspruch 2, bei der die Mittel zum Halten mindestens einen Stützpfosten (7) aufweisen, an dem die Traverse (14) oder der Tragarm (8) befestigt ist.

4. Vorrichtung nach einem der Ansprüche 1 bis 3, bei der die Mittel zum Halten (7, 8, 14) des Füllstandssensors (11) oberhalb eines zentralen Bereichs des Tanks (1) positionieren.

5. Vorrichtung nach einem der Ansprüche 1 bis 4, die mindestens einen Temperatursensor (16) zum Erfassen der Temperatur einer Flüssigkeit im Tank (1) umfasst, die mit Mitteln zum Halten des Temperatursensors (16) im Tank (1) positioniert ist.

6. Vorrichtung nach Anspruch 5, bei der der Temperatursensor (16) durch eine Öffnung (15) in den Tank (1) eingesetzt ist.

7. Vorrichtung nach einem der Ansprüche 1 bis 6, bei der der Radarsensor (11) mit einer elektronischen Datenverarbeitungsanlage verbunden ist, die so eingerichtet ist, dass sie mittels einer Tanktabelle, die Füllvolumina und die zugehörigen Füllstände umfasst, oder mittels einer die Füllvolumina in Abhängigkeit von den Füllständen angebenden Tankfunktion, aus den gemessenen Füllstandshöhen die zugeordneten Füllvolumina ermittelt.

8. Vorrichtung nach Anspruch 7, bei der in einer Leitung zum Befüllen des Tanks (1) eine Durchflussmesseinrichtung (25) angeordnet ist, die mit der elektronischen Datenverarbeitungsanlage verbunden ist und die elektronische Datenverarbeitungsanlage so eingerichtet ist, dass sie beim Befüllen des Tanks (1) aus Durchflussmesswerten die jeweiligen Füllvolumina ermittelt und diese mit den zugehörigen, mittels des Füllstandssensors (11) ermittelten Füllständen zu einer Tanktabelle zusammenfasst und/oder aus den zugeordneten Füllvolumina und Füllständen eine Tankfunktion ermittelt.

9. Vorrichtung nach Anspruch 7 oder 8, bei der die elektronische Datenverarbeitungsanlage einen Speicher für Daten über den Zusammenhang zwischen der Temperatur und der Dichte einer Flüssigkeit aufweist, mit der der Tank (1) befüllt ist, und so eingerichtet ist, dass sie für die vom Temperatursensor (16) erfasste Temperatur der Flüssigkeit im Tank (1) die Dichte der Flüssigkeit im Tank (1) ermittelt und das dem erfassten Füllstand zugeordnete Flüssigkeitsvolumen unter Berücksichtigung der Dichte bei der erfassten Temperatur der Flüssigkeit ermittelt und/oder das von der Durchflussmesseinrichtung (25) erfassten Durchflussmenge zugeordnete Füllvolumen der Flüssigkeit unter Berücksichtigung der der erfassten Temperatur zugeordneten Dichte der Flüssigkeit ermittelt.

10. Vorrichtung nach einem der Ansprüche 1 bis 9, bei der die elektronische Datenverarbeitungsanlage eine zentrale Datenverarbeitungsanlage ist, die über ein Netzwerk mit den Füllstandssensoren (11) und wahlweise den Temperatursensor (16) mehrerer Tanks (1) verbunden ist.

11. Verfahren zur Füllstandsmessung in einem flexiblen Tank (1), bei dem mit Hilfe eines Füllstandssensors (11) oberhalb einer flexiblen Wand des Tanks der Füllstand des Tanks erfasst wird, **dadurch gekennzeichnet, dass** mit Hilfe eines Radarsensors als Füllstandssensor (11) der Spiegel einer Flüssigkeit im Tank (1) durch die flexible Wand (1.1) hindurch erfasst wird.

12. Verfahren nach Anspruch 11, bei dem die Temperatur der Flüssigkeit im Tank (1) mittels eines Temperatursensors (16) erfasst wird.

13. Verfahren nach Anspruch 11 oder 12, bei dem die Füllvolumina mittels einer Tanktabelle, die die Füllvolumina und die zugehörigen Füllstände enthält, oder mittels einer die Füllvolumina in Abhängigkeit von den Füllständen angebenden Tankfunktion, ermittelt werden.

14. Verfahren nach einem der Ansprüche 11 bis 13, bei dem die dem Tank (1) zugeführte Flüssigkeitsmenge ermittelt wird und mit Hilfe der ermittelten Flüssigkeitsmenge das Füllvolumen des Tankes (1) ermittelt wird und mit Hilfe der beim Befüllen des Tankes (1) ermittelten Füllstände, die den ermittelten Füllvolumina zugeordnet sind, eine Tanktabelle oder eine Tankfunktion erstellt wird.

15. Verfahren nach einem der Ansprüche 11 bis 14, bei dem für die erfassten Temperaturen der Flüssigkeit im Tank (1) die Dichte der Flüssigkeit im Tank (1) ermittelt wird und das dem erfassten Füllstand zugeordnete Füllvolumen oder Berücksichtigung der Dichte ermittelt und/oder das der erfassten Durchflussmenge zugeordnete Flüssigkeitsvolumen mit Hilfe der Dichte der Flüssigkeit im Tank ermittelt wird.

16. Verfahren nach einem der Ansprüche 11 bis 15, bei dem in mehreren räumlich verteilt angeordneten Tanks (1) Füllstände und wahlweise Temperaturen erfasst und an eine zentrale Auswertestelle übermittelt und dort die zugeordneten Füllvolumina ermittelt werden.

17. Verfahren nach einem der Ansprüche 11 bis 16, bei dem die Füllstände in den Tanks (1) zu diskreten Zeitpunkten oder (quasi) kontinuierlich ermittelt werden.

## Claims

1. An apparatus for level measuring in a flexible tank (1) with a level sensor (11) for non-contact detection of the level of the liquid in the tank (1), having a flexible wall (1.1) and means (7, 8, 14) for holding the level sensor (11) in a position above the flexible wall (1.1) of the tank (1), **characterized in that** the tank (1) includes a liquid, and the level detector (11) is a radar sensor which detects the surface of the liquid in the tank (1) through the flexible wall.

2. An apparatus according to claim 1, wherein the means for holding have a cross bar (14) or a cantilever arm (8), on which the level sensor (11) is affixed.

3. An apparatus according to claim 2, wherein the means for holding have at least one support post (7), on which the cross bar (14) or the cantilever arm (8) is/are affixed.

4. An apparatus according to any one of claims 1 to 3, wherein the means for holding (7, 8, 14) position the level probe (11) above a central region of the tank (1).

5. An apparatus according to any one of claims 1 to 4, which has at least one temperature sensor (16) for detecting the temperature of a liquid in the tank (1), which is positioned with the aid of means for holding the temperature sensor (16) in the tank (1).

6. The apparatus according to claim 5, wherein the temperature sensor (16) is inserted into the tank (1) through an opening (15).

7. An apparatus according to any one of claims 1 to 6, wherein the level sensor (11) is connected to an electronic data processing unit which is configured such that by way of a tank chart which comprises filling volumes and the associated levels, or by way of a tank function indicating the filling volumes as a function of the levels, it determines the associated filling volumes from the measured level heights.

8. The apparatus according to claim 7, wherein a flow meter device (25) is arranged in a line for filling the tank (1) and is connected to the electronic data processing unit, and the electronic data processing unit is configured such that when the tank (1) is being filled, it determines the respective filling volumes from flow measurement values and combines the same to a tank chart with the associated levels that were detected by the level sensor (11), and/or determines a tank function from the associated filling volumes and levels.

9. An apparatus according to claim 7 or 8, wherein the electronic data processing unit has a memory for data concerning the relation between the temperature and the density of a liquid with which the tank (1) is filled, and is configured such that it determines the density of the liquid in the tank (1) for the temperature of the liquid in the tank (1) detected by the temperature sensor (16), and determines the liquid volume associated to the detected level taking into account the density at the detected temperature of the liquid, and/or determines the filling volume of the liquid associated to the flow quantity detected by the flow meter device (25), taking into account the density of the liquid associated to the detected temperature.

10. An apparatus according to any one of claims 1 to 9, wherein the electronic data processing unit is a central data processing unit which is connected to the level sensors (11) and optionally the temperature sensors (16) of plural tanks (1) via a network.

11. A method for level measuring in a flexible tank (1), wherein from out a certain position above a flexible wall of the tank (1), the level of the liquid in the tank (1) is detected, **characterized in that** by way of a radar sensor (11) the liquid level of the liquid in the tank (1) is detected across the flexible wall (1.1).

12. A method according to claim 11, wherein the temperature of the liquid in the tank (1) is detected by way of a temperature sensor (16).

13. A method according to any one of claims 11 or 12, wherein the filling volumes are determined by way of a tank chart which contains the filling volumes and the associated levels, or by way of a tank function indicating the filling volumes as a function of the levels.

14. A method according to any one of claims 11 to 13, wherein the liquid amount supplied to the tank (1) is determined and the filling volume of the tank (1) is determined by way of the determined liquid amount, and a tank chart or a tank function is established by way of the levels determined when the tank (1) is being filled, which are associated to the determined filling volumes.

15. A method according to any one of claims 11 to 14, wherein the density of the liquid in the tank (1) is determined for the detected temperatures of the liquid in the tank (1), and the liquid volume associated to the detected level is determined taking into account the density, and/or the filling volume of the liquid associated to the detected flow quantity is determined by way of the density of the liquid in the tank.

16. A method according to any one of claims 11 to 15, wherein the levels and optionally the temperatures are detected in plural spatially distributed tanks (1) and are transmitted to a central analysing unit, and the associated filling volumes are determined there.

17. A method according to any one of claims 11 to 16, wherein the levels in the tanks (1) are determined at discrete points in time or (quasi) continuously.

## Revendications

1. Appareil de mesure de niveau de la surface d'un liquide dans un réservoir à parois souples (1) avec un capteur de niveau (11) pour détecter le niveau du réservoir (1) sans contact, ledit réservoir ayant une paroi flexible (1.1) et des moyens (16, 17) pour tenir le capteur de niveau (11) dans une position au-dessus de la paroi flexible (3) du réservoir (1), **caractérisé en ce que** le réservoir (1) comporte un liquide, et que le capteur de niveau (1) est un capteur radar qui détecte la surface du liquide dans le réservoir (1) à travers la paroi flexible du réservoir (1).

2. Appareil selon la revendication 1, dans lequel les moyens pour tenir comportent une traverse (14) ou un avant-bras (8), à laquelle ou auquel le capteur de niveau (11) est fixé.

3. Appareil selon la revendication 2, dans lequel les moyens pour tenir comportent au moins un poteau de support (7), sur lequel la traverse (14) ou l'avant-bras (8) est fixé.

4. Appareil selon l'une quelconque des revendications 1 à 3, dans lequel les moyens (7, 8, 14) pour tenir le capteur de niveau (11) le positionnent au-dessus d'une zone centrale du réservoir (1).

5. Appareil selon l'une quelconque des revendications 1 à 4, qui comporte au moins un capteur de température (16) pour détecter la température d'un liquide dans le réservoir (1), qui est positionné par des moyens pour tenir le capteur de température (16) dans le réservoir (1).

6. Appareil selon la revendication 5, dans lequel le capteur de température (16) est inséré dans le réservoir (1) à travers une ouverture (15).

7. Appareil selon l'une quelconque des revendications 1 à 6, dans lequel le capteur radar (11) est relié à un ordinateur, qui est disposé tellement qu'il détermine les volumes de remplissage associés à partir des niveaux mesurés au travers d'une table de réservoir qui comporte des volumes de remplissage et les niveaux associés, ou au travers d'une fonction de réservoir qui indique les volumes de remplissage en fonction des niveaux.

8. Appareil selon la revendication 7, dans lequel un système de mesure d'écoulement (25) est arrangé dans un conduit pour remplir le réservoir (1), qui est relié à l'ordinateur et l'ordinateur est disposé tellement que lors du remplissage du réservoir (1), il détermine les volumes de remplissage correspondants à partir de données d'écoulement et les réunit avec les niveaux associés détectés par le capteur de niveau (11) à une table de réservoir, et/ou détermine une fonction de réservoir à partir des volumes de remplissage et les niveaux associés.

9. Appareil selon la revendication 7 ou 8, dans lequel l'ordinateur a une mémoire pour des données concernant le rapport entre la température et la densité d'un liquide avec le réservoir (1) est rempli, et est disposé tellement qu'il détermine la densité du liquide dans le réservoir (1) pour la température du liquide dans le réservoir (1) détectée par le capteur de température (16), et détermine le volume de liquide associé au niveau détecté prise en compte la densité du liquide dans la température détectée, et/ou détermine le volume de remplissage associé au débit de passage détecté par le système de mesure d'écoulement (25), prise en compte la densité du liquide associée à la température détectée.

10. Appareil selon l'une quelconque des revendications 1 à 9, dans lequel l'ordinateur est un ordinateur central qui est relié aux capteurs de niveau (11). et au choix les capteurs de température (16), de plusieurs réservoirs à travers un réseau.

11. Procédé de mesure de niveau dans un réservoir à parois souples (1), dans lequel le niveau du réservoir est détecté à l'aide d'un capteur de niveau (11) au-dessus d'une paroi souple du réservoir, **caractérisé en ce que** la surface d'un liquide dans le réservoir (11) est détecté à travers la paroi souple (1.1) à l'aide d'un capteur radar comme capteur de niveau (11).

12. Procédé selon la revendication 11, dans lequel la température du liquide dans le réservoir (1) est détectée avec un capteur de température (16).

13. Procédé selon la revendication 11 ou 12, dans lequel les volumes de remplissage sont déterminés au travers d'une table de réservoir qui contient les volumes de remplissage et les niveaux associés, ou au travers d'une fonction de réservoir qui indique les volumes de remplissage en fonction des niveaux.

14. Procédé selon l'une quelconque des revendications 11 à 13, dans lequel la quantité du liquide admis au réservoir (1) est déterminée et le volume de remplissage du réservoir (1) est déterminé à l'aide de la quantité du liquide déterminée, et une table de réservoir ou une fonction de réservoir est déterminé(e) à l'aide des niveaux détectés lors du remplissage du réservoir (1) qui sont associés aux volumes de remplissage déterminés.

15. Procédé selon l'une quelconque des revendications 11 à 14, dans lequel la densité du liquide dans le réservoir (1) est déterminée pour les températures du liquide dans le réservoir (1) détectées, et le volume de remplissage associé au niveau détecté est déterminé prise en compte la densité, et/ou le volume de liquide associé au débit d'écoulement détecté est déterminé à l'aide de la densité du liquide dans le réservoir..

16. Procédé selon l'une quelconque des revendications 11 à 13, dans lequel des niveaux, et au choix des températures, sont détectés dans plusieurs réservoirs (1) arrangés spatialement distribués, et sont transmis à un système d'analyse central et les volumes de remplissage associés sont déterminés ici.

17. Procédé selon l'une quelconque des revendications 11 à 13, dans lequel les niveaux dans les réservoirs (1) sont déterminés dans des instants discrètes ou (quasi) continûment.
